# EUROPEAN PATENT APPLICATION

(11) **EP 4 752 242 A1**
(43) Date of publication of application: **03.06.2026**
(21) Application number: 25759040.6
(22) Date of filing: 28.05.2025
(51) Int. Cl.: C22B 3/42, C22B 13/00, C22B 30/06

(54) **METHOD FOR EXTRACTING LEAD-212 AND BISMUTH-212 FROM THORIUM-232 DECAY CHAIN**

(30) Priority: 10.09.2024 CN 202411261811
(71) Applicant: University of South China, Hengyang, Hunan 421001 (CN)
(72) Inventor: CHEN, Lifeng, Hengyang, Hunan 421001 (CN); WEI, Yuezhou, Hengyang, Hunan 421001 (CN); NING, Shunyan, Hengyang, Hunan 421001 (CN); YIN, Xiangbiao, Hengyang, Hunan 421001 (CN); WANG, Ji, Hengyang, Hunan 421001 (CN); ZHENG, Ningchao, Hengyang, Hunan 421001 (CN); HE, Xuexiang, Hengyang, Hunan 421001 (CN); FENG, Wannian, Hengyang, Hunan 421001 (CN)
(74) Representative: Chung, Hoi Kan
(86) International application number: PCT/CN2025/097760
(87) International publication number: WO 2026/056352

(57) **Abstract**

The disclosure belongs to the field of preparation of radioisotopes for medical uses and relates to a method for extracting lead-212 and bismuth-212 from a thorium-232 decay chain, including: passing a solution containing thorium-232 decay chain substance through an anion exchange resin column, the solution containing thorium-232 decay chain substance containing halogen ions, and a concentration of hydrogen ions in the solution containing thorium-232 decay chain substance being more than 0.01 mol/L, lead -212 and bismuth -212 being adsorbed by the anion exchange resin column and other nuclides passing through the anion exchange resin column without being adsorbed; and introducing eluting agents to desorb lead-212 and bismuth-212 from the anion exchange resin column, so as to obtain lead-212 and bismuth-212 by separation and extraction. The disclosure can simultaneously extract lead-212 and bismuth-212 with a high extraction speed and high purity, and is not easy to cause organic pollution of products.

## Description

### TECHNICAL FIELD

The disclosure belongs to the field of preparation of radioisotopes for medical uses, and particularly relates to a method for extracting lead-212 and bismuth-212 from a thorium-232 decay chain.

### BACKGROUND

In recent years, incidence of cancer in the world has increased year by year, and cancer has posed serious threat to people's life and health. Radioisotopes for medical uses have important applications in cancer diagnosis and treatment, and are of great significance for ensuring people's life and health and social stability. ²¹²Pb/²¹²Bi is one of few radioisotopes that can be used in targeted α-radionuclide therapy (TAT for short), which has good effect in treatment of ovarian cancer, pancreatic cancer, prostate cancer, breast cancer and other cancers. However, its resources are very scarce, which seriously limits development and clinical application of ²¹²Pb targeted drugs.

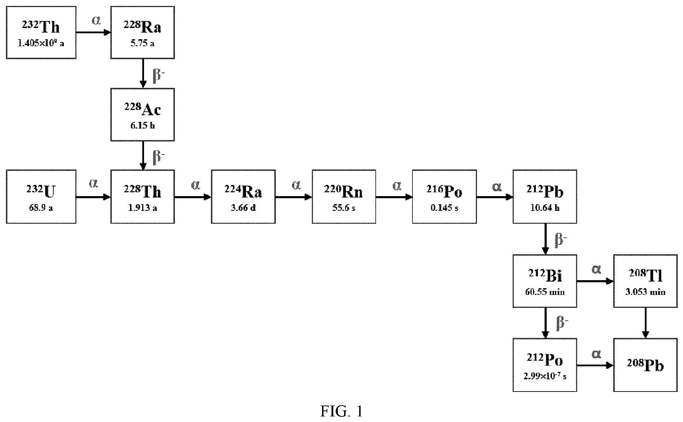

²¹²Pb/²¹²Bi is a decay daughter of ²³²Th. Separation and extraction of ²¹²Pb/²¹²Bi from natural thorium are expected to fundamentally solve a bottleneck problem of global supply shortage of ²¹²Pb/²¹²Bi, because this does not need reactors or accelerators, and enough amount of ²¹²Pb/²¹²Bi can be obtained only by spontaneous decay of ²³²Th. A ²³²Th decay chain is shown in FIG. 1.

The separation and extraction of ²¹²Pb/²¹²Bi from the natural thorium can be made in a direct separation mode or indirect separation mode. The so-called direct separation mode refers to selective extraction of ²¹²Pb and ²¹²Bi from the natural thorium by using highly selective adsorption materials for medical use. The indirect separation mode refers to separating ²²⁸Ra from ²³²Th, then separating ²²⁸Th and ²²⁴Ra progressively, and finally obtaining ²¹²Pb/²¹²Bi by means of a ²²⁴Ra/²¹²Pb generator. Currently, there are many reports on the indirect separation mode, and its technology is relatively mature. With aid of the ²²⁴Ra/²¹²Pb generator, distribution and transportation of ²¹²Pb/²¹²Bi (the former having a half-life of 10.6 h) are more facilitated. However, this mode also has shortcomings, that is, there are many complicated separation steps, and it is necessary not only to wait the daughter to grow for many times, but also to purify and test separated products for many times. This not only results in increased risk of radiation damage to personnel (especially protection against short-lived radioactive gas ²²⁰Rn in this process), but also results in high production cost and long production cycle.

In contrast, the direct separation mode is simple and efficient, and is very suitable for centralized distribution and supply of ²¹²Pb/²¹²Bi within cities, counties and even provincial administrative regions. However, difficulty and key points of this mode is to find suitable separation materials and techniques to selectively and efficiently separate ²¹²Pb and ²¹²Bi from the ²³²Th decay chain. Currently, it has been reported that the crown ether extractant can be used to selectively separate ²¹²Pb from the natural thorium based on solid-phase adsorption (that is, using Pb resin), but it cannot extract ²¹²Bi at the same time, resulting in waste of scarce nuclide resources. In addition, the crown ether extractant is very expensive and has certain water solubility, and thus it may be necessary to further separate and purify them to remove dissolved crown ether before making them into drugs.

### SUMMARY

The technical problem to be solved by the disclosure is to provide a method for extracting lead-212 and bismuth-212 from a thorium-232 decay chain, which can simultaneously extract lead-212 and bismuth-212 with a high extraction speed and high purity, and is not easy to cause organic pollution of products.

A method for extracting lead-212 and bismuth-212 from a thorium-232 decay chain is provided in an embodiment of the disclosure, which includes: passing a solution containing thorium-232 decay chain substance through an anion exchange resin column, the solution containing thorium-232 decay chain substance containing halogen ions, and a concentration of hydrogen ions in the solution containing thorium-232 decay chain substance being more than 0.01 mol/L (preferably, the concentration of hydrogen ions being 0.5 to 2 mol/L), lead -212 and bismuth -212 being adsorbed by the anion exchange resin column and other nuclides such as 228Ra, 228Ac and 232Th passing through the anion exchange resin column without being adsorbed; and introducing eluting agents to desorb lead-212 and bismuth-212 from the anion exchange resin column, so as to obtain lead-212 and bismuth-212 by separation and extraction.

The thorium-232 decay chain includes a parent ²³²Th, and further includes its decay daughters at all levels, such as ²²⁸Ra, ²²⁸Ac, ²²⁸Th, ²¹²Pb, ²¹²Bi, ²⁰⁸Tl, etc., as shown in FIG. 1.

Preferably, the concentration of halogen ions in the solution containing thorium-232 decay chain substance is 0.3 to 4 mol/L, more preferably 0.5 to 2 mol/L.

Preferably, the thorium-232 decay chain substance is thorium salt or thorium oxide, more preferably a soluble salt containing thorium-232.

Preferably, the thorium salt is thorium nitrate hydrate.

Preferably, the halogen ions exist in a form of acid or salt containing Cl⁻, Br⁻ or I⁻, preferably hydrochloric acid, hydrobromic acid or hydroiodic acid, with a concentration of preferably 0.3 to 4 mol/L, more preferably 0.3 to 2 mol/L. More preferably, the halogen ions exist in a form of hydrobromic acid or hydroiodic acid.

In the solution containing thorium-232 decay chain substance, anions do not includes other anion with a concentration over the concentration of halogen ions except the halogen ions, otherwise, competitive adsorption may occur, which results in poor selective adsorption effect of lead and bismuth.

When the hydrochloric acid is adopted, a concentration of hydrochloric acid is preferably 0.5 to 3 mol/L, more preferably 1 to 2 mol/L.

When the hydrobromic acid is adopted, a concentration of hydrobromic acid is preferably 0.3 to 2 mol/L, more preferably 0.3 to 1 mol/L.

When the hydroiodic acid is adopted, a concentration of hydroiodic acid is preferably 0.5 to 3 mol/L, more preferably 0.5 to 1 mol/L.

Preferably, the anion exchange resin is silica-based anion exchange resin.

Preferably, the silica-based anion exchange resin is prepared as follows: in-situ solution copolymerization of 4-vinylpyridine and divinylbenzene in porous SiO₂ pore canals in a presence of initiator and diluent is performed to obtain silica-based polyvinyl pyridine, and methylation reaction of silica-based polyvinyl pyridine and dimethyl sulfate is performed to obtain the silica-based anion exchange resin.

The initiator is a mixture of azodiisobutyronitrile and 1,1'- azobis(cyclohexanecarbonitrile), and the diluent is acetophenone and diethyl phthalate. A volume ratio of 4-vinylpyridine and divinylbenzene is 15-20:5-7.

Solvent for the methylation reaction is methanol aqueous solution, with a mass ratio of methanol to water being 1:1.

Preferably, the silica-based anion exchange resin has an effective particle size of 37 to 150 µm, a BET specific surface area of 50 to 80 m²/g, and an average pore size of 10 to 50 nm.

Preferably, in separating lead-212, the eluting agent is an aqueous solution with a salt concentration or acid concentration less than 0.5 mol/L, more preferably ultrapure water; and in separating bismuth-212, the eluting agent is a nitric acid solution with a concentration greater than 0.5 mol/L, more preferably 1 to 2 mol/L HNO₃.

Preferably, before introducing the eluting agents, a solution containing halogen ions (preferably hydrochloric acid, hydrobromic acid or hydroiodic acid preferably with a concentration of 0.5 to 1 mol/L) is introduced to elute other ions except lead-212 and bismuth-212.

The disclosure has beneficial effects that the disclosure provides a technical method which can directly, rapidly and simultaneously selectively separate ²¹²Pb and ²¹²Bi from natural ²³²Th through a large number of experimental studies. In the disclosure, a silica-based anion exchange resin is preferred. Compared with conventional all-organic commercial resin, it has advantages of fast adsorption/desorption, low column pressure and good hydraulic properties, and is especially suitable for efficient separation and extraction of radioactive isotopes with short half-lives, such as ²¹²Pb (with a half-life of 10.64 h) and ²¹²Bi (with a half-life of about 1 h). It is found that it has high adsorption selectivity for ²¹²Pb and ²¹²Bi in halogen medium, and substantially does not adsorb other nuclides in the ²³²Th decay chain. Therefore, the separation method using such silica-based anion exchange resin can effectively solve many defects existing in conventional methods of separating and extracting ²¹²Pb by using crown ether materials. This method can be applied not only to selective separation and extraction of ²¹²Pb and ²¹²Bi from a natural ²³²Th decay chain, but also to selective separation and extraction of ²¹²Pb and ²¹²Bi from a ²²⁸Ra decay chain, a ²²⁸Th decay chain and a ²²⁴Ra decay chain, and further to all other occasions involving selective extraction of lead and bismuth from complex systems of thorium, radium, actinium, lanthanum, barium, lead, bismuth and the like.

The disclosure provides a new method for directly, rapidly and selectively separating ²¹²Pb and ²¹²Bi from the ²³²Th solution, which effectively avoids use of expensive crown ether extractant with water solubility. It is confirmed by a γ spectrometer that obtained ²¹²Pb samples have very high purity and substantially contains no impurity nuclides such as Th, Ac and Ra.

The material adopted by the disclosure is the silica-based anion exchange resin, which has advantages of low price, fast adsorption/desorption kinetics, low column pressure, good hydraulic properties and stable chemical properties and no ease of dissolving, and can simultaneously realize separation and extraction of ²¹²Pb and ²¹²Bi in the ²³²Th decay chain, thus ensuring maximum utilization of scarce nuclide resources.

According to the disclosure, the acidic solution containing halogen ions is adopted, so that the anion exchange resin can adsorb ²¹²Pb and ²¹²Bi simultaneously and rapidly, but substantially does not adsorb other metal elements. In eluting, different eluents can be selected to elute ²¹²Pb and ²¹²Bi, so as to separate ²¹²Pb and ²¹²Bi, and separated products have high purity.

### BRIEF DESCRIPTION OF DRAWINGS

FIG. 1 shows a decay chain of ²³²Th and ²³²U.
FIG. 2 shows comparison of adsorption kinetics between SiPyR-N4 resin and commercial anion exchange resins IRA900 and PA316.
FIG. 3 shows change of TOC content in SiPyR-N4 suspension over time.
FIG. 4 shows static adsorption behavior of SiPyR-N4 resin for different metal ions in hydrochloric acid medium.
FIG. 5 shows static adsorption behavior of SiPyR-N4 resin for different metal ions in hydrobromic acid medium.
FIG. 6 shows static adsorption behavior of SiPyR-N4 resin for different metal ions in hydroiodic acid medium.
FIG. 7 shows static adsorption behavior of SiPyR-N4 resin for different metal ions in nitric acid medium.
FIG. 8 shows static adsorption behavior of commercial IRA900 resin for different metal ions in hydrochloric acid medium.
FIG. 9 shows static adsorption behavior of commercial PA316 resin for different metal ions in hydrochloric acid medium.
FIG. 10 shows comparison of eluting effect of different eluents on lead.
FIG. 11 shows comparison of eluting effect of different eluents on bismuth.
FIG. 12 shows separation of Pb and Bi from Th, La and Ba;
   in which I indicates dead volume; II indicates a mixed metal solution; III indicates 1.0 M HCl solution; IV indicates ultrapure water; and V indicates 1.0 M HNO3.
FIG. 13 shows comparison of γ spectra of solid ²³²Th (a) with ²¹²Pb(b) and ²¹²Bi(c) samples obtained by separation, in which (a) shows the γ spectrum of solid ²³²Th, (b) shows the γ spectrum of a ²¹²Pb solution obtained by separation, and (c) shows the γ spectrum of ²¹²Bi solution obtained by separation.

### DETAILED DESCRIPTION OF THE EMBODIMENTS

### Example 1

The anion exchange resin is silica-based anion exchange resin, which is prepared in two steps.

### Step 1: Synthesis of silica-based poly(4-vinylpyridine) (SiPyR-N3)

Firstly, 100 g porous SiO₂ particles were added to a flask of a rotary evaporator. The flask was kept rotating at a low speed. Nitrogen was used to replace oxygen in the rotary evaporator twice, and then vacuum was pumped to 20 hPa. At the same time, 45 ml of ACP (acetophenone), 30 ml of DEP (diethyl phthalate), 17.69 ml of 4-vinylpyridine, 6.41 ml of DVB (divinylbenzene), 0.3215 g of AIBN (azodiisobutyronitrile) and 0.2144 g of V-40 (1,1'- azobis(cyclohexanecarbonitrile)) were mixed in sequence. After initiators AIBN and V-40 were completely dissolved, a mixed oil phase was introduced into the flask of the rotary evaporator by pressure difference. A rotating speed was adjusted and a flask wall was tapped slightly, so that the oil phase was fully mixed with SiO₂ until there was no obvious agglomeration. At this time, it can be considered that the oil phase has completely entered SiO₂. Nitrogen was charged to restore to a normal pressure, and then temperature was raised to start a polymerization reaction. Heating was performed using an oil bath respectively with 60°C for 1 h, 70°C for 2 h, 80°C for 2 h and 90°C for 13 h. After reaction, acetone and ultrapure water were alternately used for washing twice. The product was named SiPyR-N3 and was placed in a vacuum drying oven for drying at 40°C for 48 h for later use.

### Step 2: Preparation of silica-based anion exchange resin SiPyR-N4 with SiPyR-N3 as precursor

A proper amount of SiPyR-N3 resin and 500 g of methanol/water (with a mass ratio of 1:1) were successively added into a dry 250 mL three-necked flask equipped with a stirring paddle and a dropping funnel. Water bath heating was performed with a reaction temperature being maintained at about 25°C. Subsequently, a molar amount of dimethyl sulfate, which was 3 times that of vinyl pyridine contained in the SiPyR-N3 resin in the flask, was taken and slowly added to the flask, with a flow rate being controlled by the dropping funnel. Stirring was performed at a low speed, and 10 M sodium hydroxide solution was taken to control a pH of the solution to be neutral. After the pH of the solution was gradually stabilized and no longer changes, a molar amount of dimethyl sulfate, which was 2 times that of vinyl pyridine contained in the SiPyR-N3 resin in the flask, was additionally added. Then, the pH was further controlled so that the reaction was kept to be performed under a neutral condition. After the reaction was completed, its product was named SiPyR-N4, and washed twice with acetone and ultrapure water alternately. Afterwards, washing was continued by using 5M NaCl solution and ultrapure water, and SiPyR-N4 was converted into a chlorine type. Finally, the converted SiPyR-N4 was placed in a vacuum drying oven for drying at 40°C for 48 h for later use.

A functional group of quaternized strong base silica-based anion exchange resin SiPyR-N4 was 1-methylpyridine, and the resin had an effective particle size of 37 to 150 µm, an organic component of about 25.5%, a BET specific surface area of about 52.2 m²/g, and an average pore size of 36.8 nm.

### Example 2

This example shows comparative experiment of adsorption speed of different resins, which includes following steps.
(1) A certain amount of bismuth nitrate was dissolved in 1.0 M HCl medium to prepare a mixed working solution containing 1.0 M HCl and 500 mg/L Bi.
(2) Some clean small glass bottles with a volume of 40 mL were taken and 0.05 g of the resin of Example 1 was added into each of the glass bottles. Another 20 mL of mixed working solution was added to the small glass bottles. The glass bottles was covered and sealed, and was placed in a water bath shaker at 25°C for oscillation, with an oscillation frequency of 120 rpm.
(3) Different mixing contact time was set, and solid-liquid separation was immediately performed on samples with a microporous membrane after reaching time nodes.
(4) The solutions before and after adsorption were diluted with dilute nitric acid to an appropriate concentration, and then a concentration of Bi in the solution was measured by an inductively coupled plasma atomic emission spectrometer (ICP-AES). Based on difference between concentrations before and after adsorption, adsorption efficiency of resin was determined, and an adsorption kinetics curve of adsorption efficiency over time was drawn.
(5) Adsorption kinetics curves of commercial strong base anion exchange resin IRA900 and PA316 were also evaluated by the method of the above steps (1)-(4), and adsorption speeds were compared.

IRA900 resin is a commercial strong base anion exchange resin, which is produced by Dow Chemical Company of the United States, with a skeleton structure of styrene-divinylbenzene copolymer and a functional group of trimethyl quaternary ammonium salt.

PA316 resin is a commercial strong basic anion exchange resin, which is produced by Mitsubishi Plastics of Japan, with a skeleton structure and a functional groups consistent with the IRA900 resin.

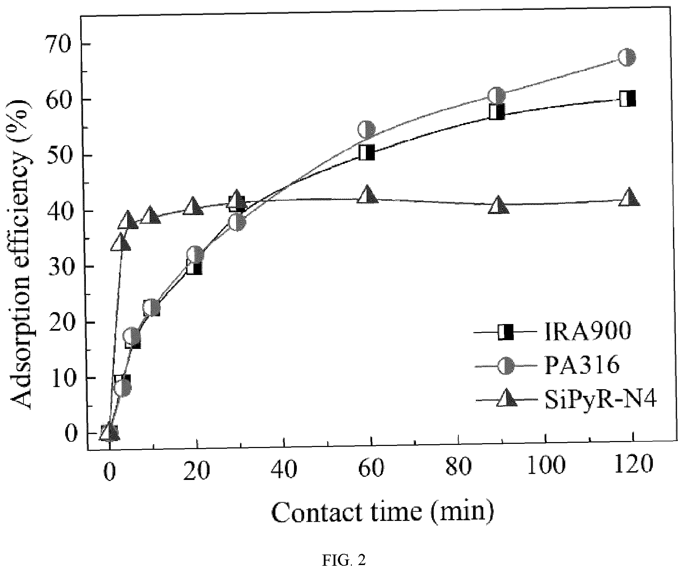

Experimental results are shown in FIG. 2, the resin of Example 1 substantially reachs adsorption equilibrium within 10 minutes, while the IRA900 and PA316 resins need more than 120 minutes to reach the adsorption equilibrium. An adsorption speed of the resin of Example 1 was significantly larger than that of the commercial anion exchange resin.

### Example 3

This example shows chemical stability experiment of the resin in Example 1, which includes following steps.
(1) A batch of clean glass bottles was taken, 0.1 g of the resin of Example 1 into each of the glass bottles, then 30 ml of 1.0 M HCl solution was transferred to mix with the resin, and the bottles were covered and sealed.
(2) The batch of glass bottles were placed in a water bath shaker at a constant temperature of 25°C for oscillation, with an oscillation frequency being set at 120 rpm.
(3) Different mixing contact time was set, and solid-liquid separation was immediately performed on samples with a microporous membrane after reaching time points.
(4) A total organic carbon (TOC) analyzer was used to analyze TOC content in the solution, and a change curve of TOC with contact time was drawn.

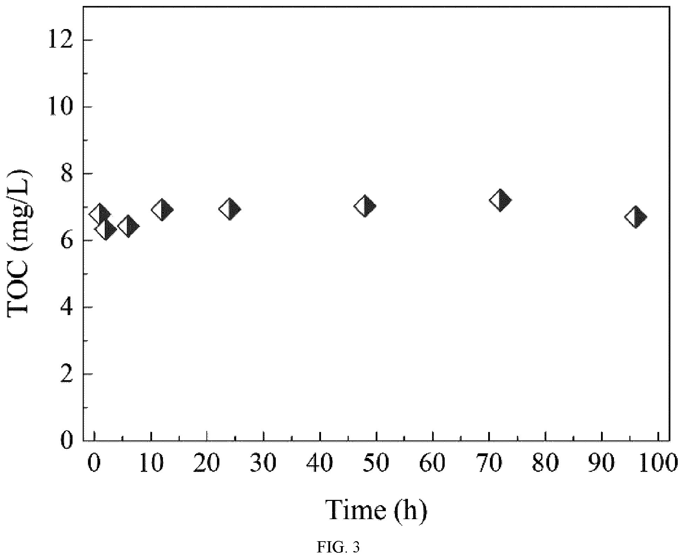

Experimental results are shown in FIG. 3, the TOC content in the solution has no obvious change over time, which shows that the resin of Example 1 has good chemical stability and is insoluble in water.

### Example 4

This example shows selective adsorption experiment, which includes following steps.
(1) A certain amount of thorium nitrate, lead nitrate, bismuth nitrate, lanthanum nitrate and barium nitrate were weighed and dissolved in HCl media with different concentrations to prepare mixed solutions containing 100 mg/L Th, 90 mg/L Pb, 90 mg/L Bi, 60 mg/L La and 60 mg/L Ba.
(2) Some clean small glass bottles with a volume of 40 mL were taken and 0.05 g of the resin of Example 1 was added into each of the glass bottles, and 20 mL of the mixed solution were additionally added to the small glass bottles. The glass bottles was covered and sealed, and was placed in a water bath shaker at 25°C for oscillation, with an oscillation frequency of 120 rpm. Here, stable ²⁰⁷Pb is used to simulate the ²¹²Pb in the ²³²Th decay chain; stable ²⁰⁹Bi is used to simulate ²¹²Bi in the ²³²Th decay chain; La is similar to Ac in chemical properties and is used to simulate ²²⁸Ac in ²³²Th decay chain; Ba and Ra are similar in chemical properties, and are used to simulate ²²⁴Ra and ²²⁸Ra in the ²³²Th decay chain.
(3) After oscillation for 2 h, solid-liquid separation was performed on the samples by a microporous membrane.
(4) The solutions before and after adsorption were diluted with dilute nitric acid to an appropriate concentration, and then concentrations of respective metal elements in the solution were measured by an inductively coupled plasma atomic emission spectrometer (ICP-AES). Adsorption efficiency of the resin for different metal elements was determined based on concentration difference of respective metal elements before and after adsorption.
(5) Adsorption behaviors of the SiPyR-N4 resin in hydrobromic acid and hydroiodic acid media were also investigated by the above steps (1 to 4).

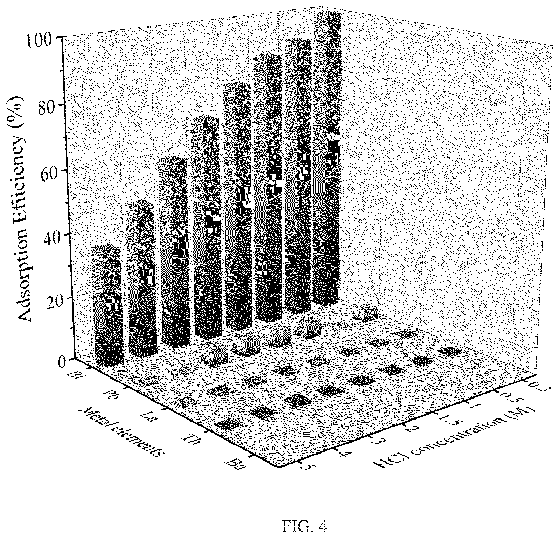

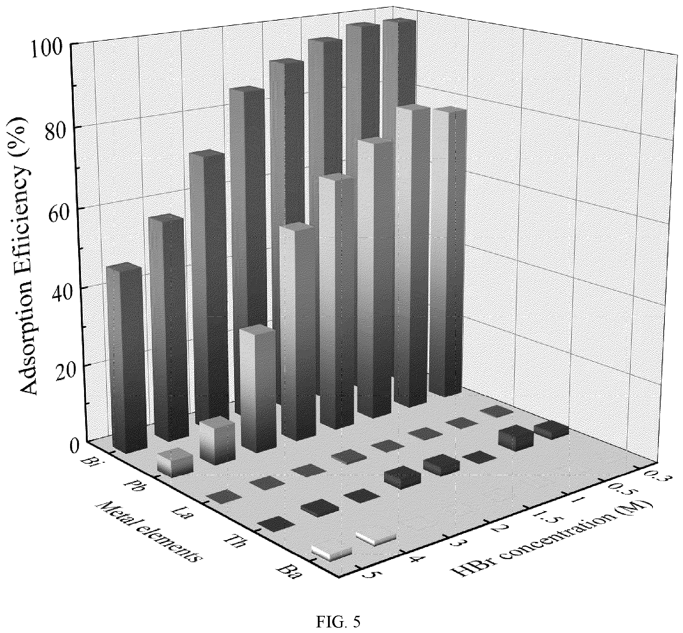

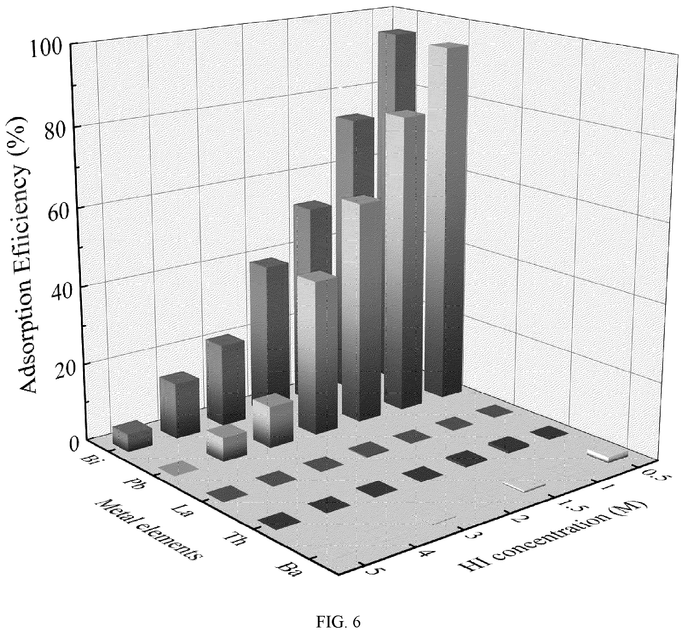

Experimental results are shown in FIGS. 4, 5 and 6. The resin of Example 1 shows unique adsorption selectivity for Pb and Bi in three types of acid media, and does not adsorb Th, Ba and La elements.

As can be seen from FIGS. 4 to 6, during static adsorption, anion exchange resin mainly adsorbs Bi and a small amount of Pb in hydrochloric acid medium, and substantially does not adsorb other ions such as La, Th and Ba. In hydrobromic acid medium, the resin mainly adsorbs Bi and Pb, but with better adsorption effect in low-concentration hydrobromic acid than in high-concentration hydrobromic acid. When the concentration exceeds 3 mol/L, adsorption effect of the resin on Bi and Pb may decrease. The resin also mainly adsorbs Bi and Pb in hydroiodic acid medium, and adsorption effect of the resin in low-concentration hydroiodic acid is better than that in high-concentration hydroiodic acid. When the concentration exceeds 2 mol/L, adsorption of Bi and Pb by the resin may decrease.

### Comparative Example 1

Compared with Example 4, difference lies in that in step (1), a certain amount of thorium nitrate, lead nitrate, bismuth nitrate, lanthanum nitrate and barium nitrate were weighed and dissolved in HNO₃ media with different concentrations. Other steps were the same as Example 4.

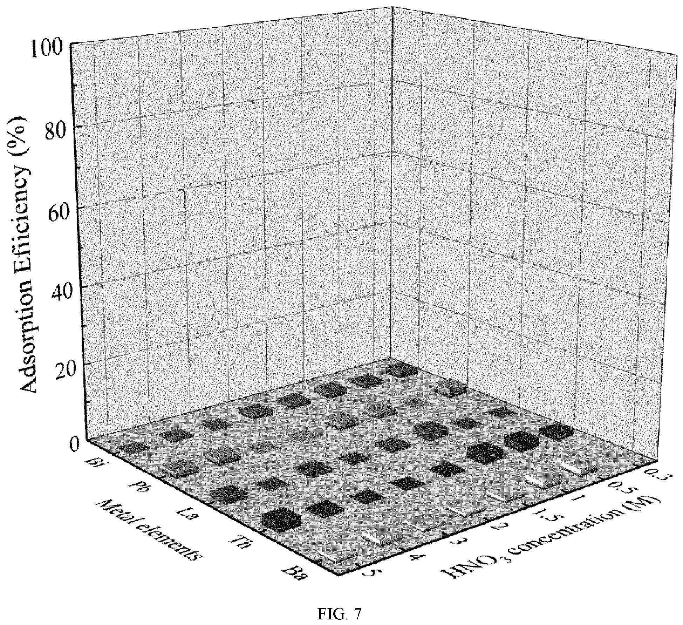

Experimental results are shown in FIG. 7. The silica-based anion exchange resin substantially does not adsorb any metal ions in HNO₃ medium, which means that selective separation of lead and bismuth cannot be achieved. It can be seen that Example 4 is more suitable for selective separation of lead and bismuth than Comparative example 1 in terms of a solution system.

### Example 5

This example shows comparative experiment on the adsorption behavior of different anion exchange resins on thorium, lead, bismuth, lanthanum and barium in hydrochloric acid medium which includes following steps.
(1) A certain amount of thorium nitrate, lead nitrate, bismuth nitrate, lanthanum nitrate and barium nitrate were weighed and dissolved in HCl media with different concentrations to prepare mixed solutions containing 100 mg/L Th, 90 mg/L Pb, 90 mg/L Bi, 60 mg/L La and 60 mg/L Ba.
(2) Some clean small glass bottles with a volume of 40 mL were taken and 0.05 g of IRA900 resin was added into each of the glass bottles, and 20 mL of the mixed solution were additionally added to the small glass bottles. The glass bottles was covered and sealed, and was placed in a water bath shaker at 25°C for oscillation, with an oscillation frequency of 120 rpm.
(3) After oscillation for 2 h, solid-liquid separation was performed on the samples by a microporous membrane.
(4) The solutions before and after adsorption were diluted with dilute nitric acid to an appropriate concentration, and then concentrations of respective metal elements in the solution were measured by an inductively coupled plasma atomic emission spectrometer (ICP-AES). Adsorption efficiency of the resin for different metal elements was determined based on concentration difference of respective metal elements before and after adsorption.
(5) Adsorption behaviors of IRA900 resin and PA316 resin in hydrochloric acid medium were also investigated by the above steps (1 to 4), and compared with that of SiPyR-N4.

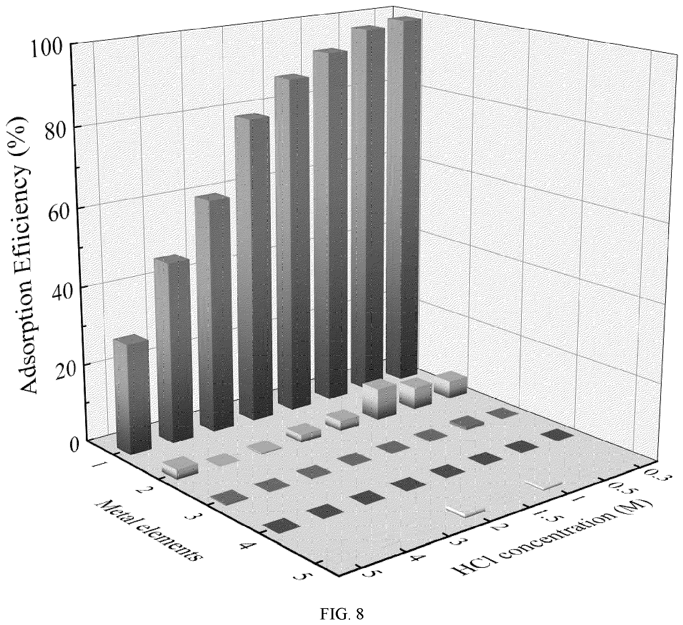

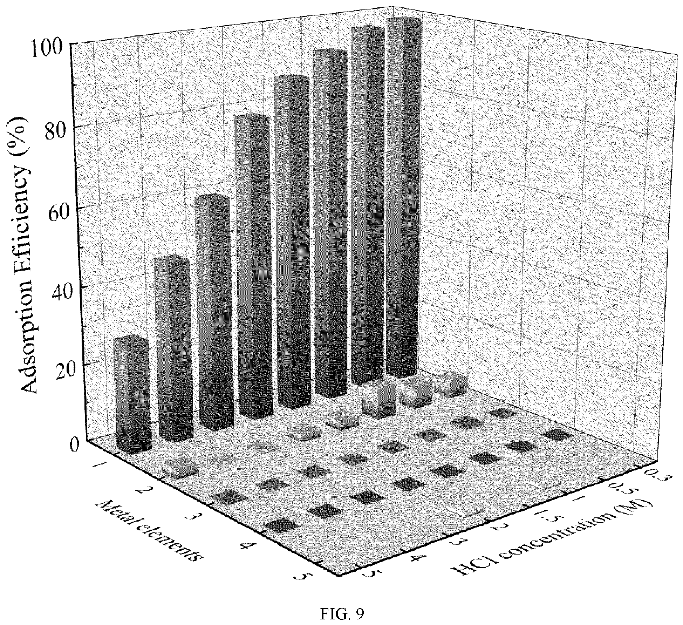

Experimental results are shown in FIGS. 8 and 9. The anion exchange resins produced by three different companies all have same adsorption behaviors, that is, they can selectively adsorb lead and bismuth under experimental conditions, and thus they can all be used for selective separation of ²¹²Pb and ²¹²Bi in the natural ²³²Th decay chain.

### Example 6

This example shows elution experiment of lead, which includes following steps.
(1) some SiPyR-N4 resin of Example 1 was taken and filled in a glass adsorption column with *ϕ* × *h* = 0.5 cm × 50 cm until it was filled up.
(2) A bottom-up flow mode was adopted, ultrapure water was first introduced to remove bubbles, with a flow rate being adjusted to 1.0 mL/min.
(3) 50 mL 1.0 M HCl was introduced to pretreat the resin column.
(4) A certain amount of lead nitrate was weighed and dissolved in 1.0 M HCl medium to prepare a hydrochloric acid solution containing 90 mg/L Pb.
(5) About 45 mL of the above lead solution was introduced, then 50 mL of ultrapure water was introduced, and a concentration of lead was measured in an effluent by ICP-AES.
(6) The above steps (1 to 4) were repeated and the ultrapure water in step (5) was changed to 0.1 M HCl and 0.01 M HCl respectively, and elution effect of the ultrapure water and the dilute acid solution on lead was compared.

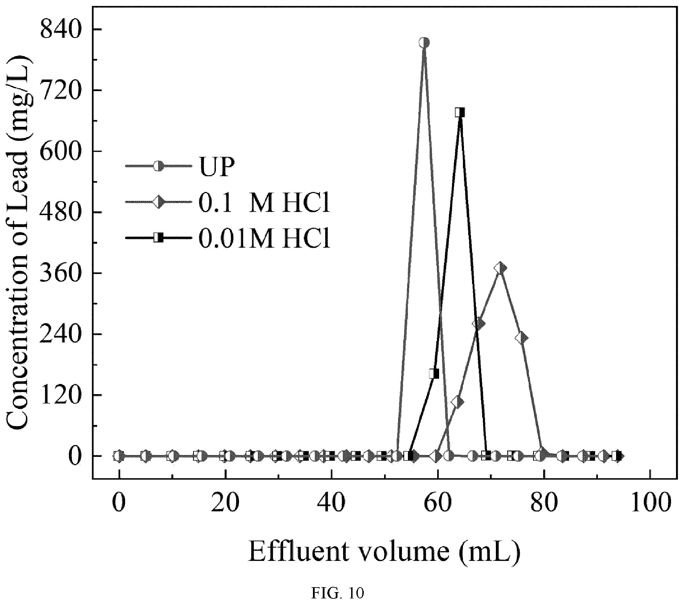

Experimental results are shown in FIG. 10, compared with 0.1 M HCl and 0.01 M HCl, the ultrapure water can elute lead more easily and achieve a higher enrichment fold.

### Example 7

This example shows elution experiment of bismuth, which includes following steps.
(1) Some SiPyR-N4 resin of Example 1 was taken and filled in a glass adsorption column with *ϕ* × *h* = 0.5 cm × 50 cm until it was filled up.
(2) A bottom-up flow mode was adopted, ultrapure water was first introduced to remove bubbles, with a flow rate being adjusted to 1.0 mL/min.
(3) 50 mL 1.0 M HCl was introduced to pretreat the resin column.
(4) A certain amount of lead nitrate was weighed and dissolved in 1.0 M HCl medium to prepare a hydrochloric acid solution containing 90 mg/L Bi.
(5) About 45 mL of the above Bi solution was introduced, then 100 mL of 1.0 M HNO₃ solution was introduced, and a concentration of Bi was measured in an effluent by ICP-AES.
(6) The above steps (1 to 4) were repeated and the ultrapure water in step (5) was changed to 3 M HNO₃ and 0.1 M HNO₃ respectively, and elution effect of 1.0 M HNO₃ and nitric acid solutions with other concentrations on bismuth was compared.

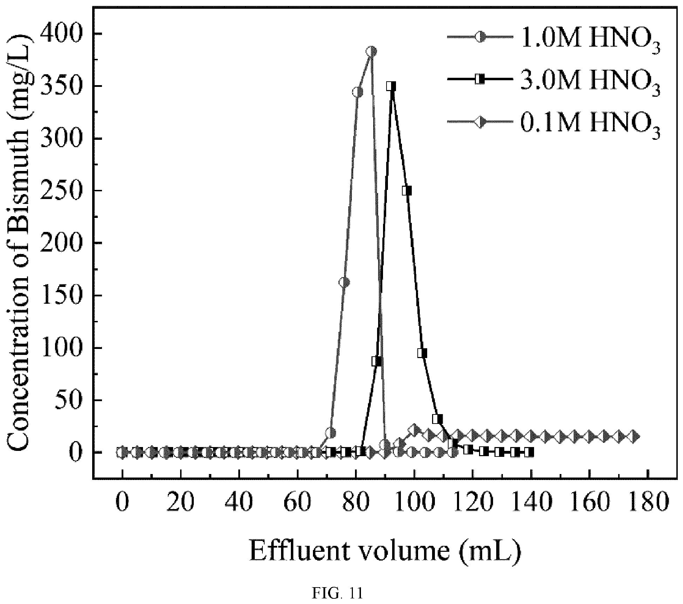

Experimental results are shown in FIG. 11. Compared with 3.0 M HNO₃ and 0.1 M HNO₃, 1.0 M HNO₃ can elute Bi more easily and achieve a higher enrichment fold. In contrary, 0.1 M HNO₃ can hardly realize complete elution of Bi.

### Example 8

This example shows cold simulation separation experiment, which includes following steps.
(1) Some resin of Example 1 was taken and filled in a glass adsorption column with *ϕ× h =* 0.5 cm × 50 cm until it was filled up.
(2) A bottom-up flow mode was adopted, ultrapure water was first introduced to remove bubbles, with a flow rate being adjusted to 1.0 mL/min.
(3) 50 mL 1.0 M HCl was introduced to pretreat the resin column.
(4) A certain amount of thorium nitrate, lead nitrate, bismuth nitrate, lanthanum nitrate and barium nitrate were weighed and dissolved in 1.0 M HCl medium to prepare mixed solutions containing 100 mg/L Th, 90 mg/L Pb, 90 mg/L Bi, 60 mg/L La and 60 mg/L Ba.
(5) About 45 mL of the above mixed solution was introduced. At this time, Pb and Bi were simultaneously fixed to the resin column, while other elements such as thorium, lanthanum and barium directly passed through the resin column.
(6) 15 ml of 1.0 M HCl solution was introduced, and residual thorium, lanthanum and barium on the resin column were eluted.
(7) 25 mL of ultrapure water was introduced to desorb Pb adsorbed on the resin column.
(8) 50 mL 1.0 M HNO₃ solution was introduced to desorb Bi fixed to the resin column.
(9) Effluent was collected by a fraction collector, with collection time for each centrifugal tube being set at 5 min. ICP-AES was used to measure concentrations of metal elements in respective centrifugal tubes.

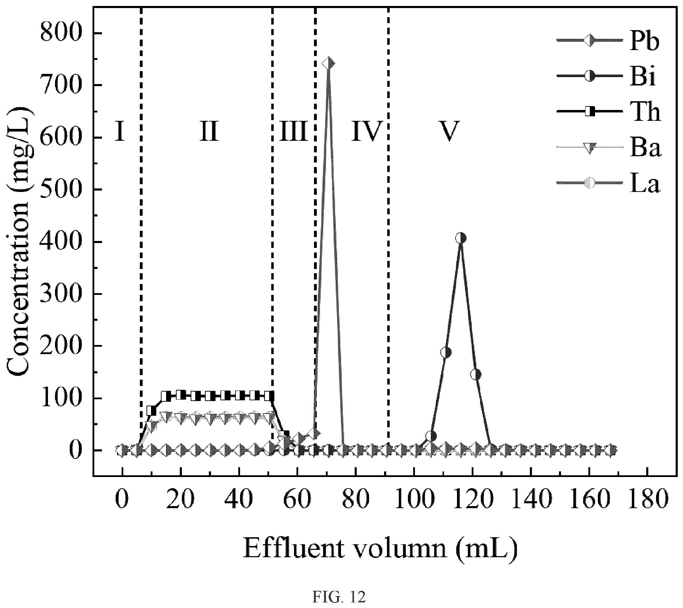

As shown in FIG. 12, the resin column of Example 1 can selectively fix Pb and Bi in the mixed metal solution, but substantially does not adsorb Th, Ba and La elements. Pb and Bi were successfully separated from the Th solution and recovered separately.

### Example 9

This example shows thermal separation experiment which includes following steps.
(1) Some resin of Example 1 was taken and filled in a glass adsorption column with *ϕ* × *h* = 0.5 cm × 50 cm until it was filled up.
(2) A bottom-up flow mode was adopted, ultrapure water was first introduced to remove bubbles, with a flow rate being adjusted to 1.0 mL/min.
(3) 50 mL 1.0 M HCl was introduced to pretreat the resin column.
(4) 2.0 g of thorium nitrate hydrate was weighed and dissolved in 45 mL 1.0 M HCl medium.
(5) About 45 mL of the above mixed solution was introduced. At this time, Pb and Bi were simultaneously fixed to the resin column, while other elements such as thorium, actinium and radium directly passed through the resin column.
(6) 15 ml of 1.0 M HCl solution was introduced, and residual thorium, actinium and radium on the resin column were eluted.
(7) 25 mL of ultrapure water was introduced to desorb ²¹²Pb adsorbed on the resin column.
(8) 50 mL 1.0 M HNO₃ solution was introduced to desorb ²¹²Bi fixed to the resin column.
(9) The collected ²¹²Pb samples were taken for γ-energy spectrum analysis, and compared with γ-energy spectrum of ²³²Th. Meanwhile, Th concentrations in the ²¹²Pb samples were analyzed using ICP-AES.

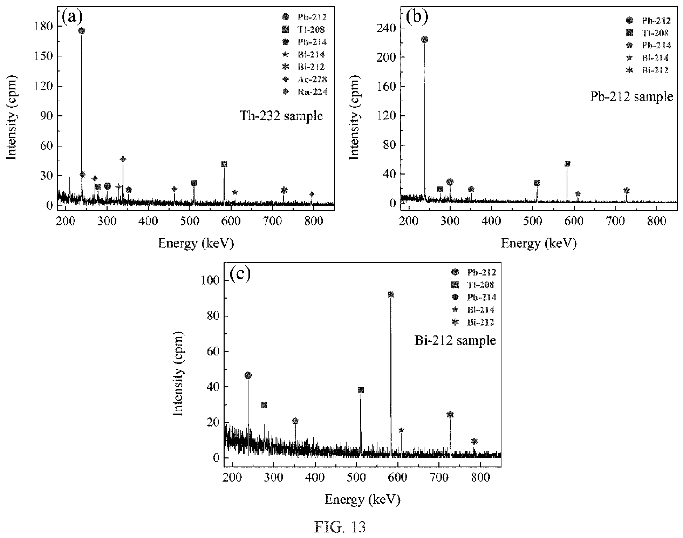

Experimental results are shown in FIG. 13. Compared with a γ spectrum peak of solid ²³²Th, γ spectrum peaks of nuclides of ²¹²Pb and ²¹²Bi samples obtained in the disclosure are less, and trace amounts of ²²⁴Ra and ²²⁸Ac existing in the ²³²Th decay chain are completely removed, while ²¹²Pb and ²¹²Bi are substantially retained and have higher purity. Results of ICP-AES show that a concentration of thorium in sample solutions of ²¹²Pb and ²¹²Bi was 0 mg/L, which is lower than a detection limit of an instrument, which indicates that ²³²Th and ²²⁸Th are completely removed. Therefore, combined with Example 4, the experiment successfully indicates that this method can be used to selectively extract ²¹²Pb and ²¹²Bi directly from the ²³²Th decay chain.

It should be understood by those of ordinary skill in the art that discussion of any of the above embodiments is only exemplary, and is not intended to imply that the protection scope of the disclosure is limited to these examples; under the idea of this disclosure, the technical features in the above embodiments or different embodiments can also be combined, and the steps can be realized in any order; and there are many other changes in different aspects of one or more embodiments of this disclosure as described above, which are not provided in details for brevity.

One or more embodiments of the present disclosure are intended to cover all such alternatives, modifications and variations that fall within the broad scope of the append claims. Therefore, any omissions, modifications, equivalent substitutions, improvements, etc. made within the spirit and principles of the one or more embodiments of this disclosure shall be encompassed within the protection scope of this disclosure.

## Claims

1. A method for extracting lead-212 and bismuth-212 from a thorium-232 decay chain, comprising: passing a solution containing thorium-232 decay chain substance through an anion exchange resin column, the solution containing thorium-232 decay chain substance containing halogen ions, and a concentration of hydrogen ions in the solution containing thorium-232 decay chain substance being more than 0.01 mol/L, lead -212 and bismuth -212 being adsorbed by the anion exchange resin column and other nuclides passing through the anion exchange resin column without being adsorbed; and introducing eluting agents to desorb lead-212 and bismuth-212 from the anion exchange resin column, so as to obtain lead-212 and bismuth-212 by separation and extraction.

2. The method according to claim 1, wherein the concentration of halogen ions is 0.3 to 4 mol/L.

3. The method according to claim 1, wherein the thorium-232 decay chain substance is thorium salt or thorium oxide.

4. The method according to claim 3, wherein the thorium salt is thorium nitrate hydrate.

5. The method according to claim 1, wherein the halogen ions exist in a form of acid or salt containing Cl⁻, Br⁻ or I⁻.

6. The method according to claim 1, wherein the anion exchange resin is silica-based anion exchange resin.

7. The method according to claim 6, wherein the silica-based anion exchange resin is prepared as follows: in-situ solution copolymerization of 4-vinylpyridine and divinylbenzene in porous SiO₂ pore canals in a presence of initiator and diluent is performed to obtain silica-based polyvinyl pyridine, and methylation reaction of silica-based polyvinyl pyridine and dimethyl sulfate is performed to obtain the silica-based anion exchange resin.

8. The method according to claim 6, wherein the silica-based anion exchange resin has an effective particle size of 37 to 150 µm, a BET specific surface area of 50 to 80 m²/g, and an average pore size of 10 to 50 nm.

9. The method according to claim 1, wherein in separating lead-212, the eluting agent is an aqueous solution with a salt concentration or acid concentration less than 0.5 mol/L; and in separating bismuth-212, the eluting agent is a nitric acid solution with a concentration greater than 0.5 mol/L.

10. The method according to claim 9, wherein in separating lead-212, the eluting agent is ultrapure water; and in separating bismuth-212, the eluting agent is 1.0 M nitric acid.
